# EUROPÄISCHE PATENTSCHRIFT

(11) **EP 1 824 587 B1**
(45) Veröffentlichungstag und Bekanntmachung des Hinweises auf die Patenterteilung: **19.12.2007**
(21) Anmeldenummer: 05807857.7
(22) Anmeldetag: 20.10.2005
(51) Int. Cl.: B01F 7/10, B01F 15/06, B01F 15/00, B01J 19/18

(54) **REAKTOR ZUR BEHANDLUNG HOCHVISKOSER KUNSTSTOFFSCHMELZEN**
REACTOR FOR THE TREATMENT OF HIGHLY VISCOUS PLASTIC MELTS
REACTEUR SERVANT A TRAITER DES MASSES FONDUES DE PLASTIQUE DE VISCOSITE ELEVEE

(30) Priorität: 12.11.2004 DE 102004054687
(43) Veröffentlichungstag der Anmeldung: 29.08.2007
(73) Patentinhaber: Lurgi Zimmer GmbH, 60295 Frankfurt am Main (DE)
(72) Erfinder: KÄMPF, Rudolf, 63584 Gründau (DE); SCHULZE, Michael, 60388 Frankfurt am Main (DE)
(74) Vertreter: Meyer-Dulheuer, Karl-Hermann
(86) Internationale Anmeldenummer: PCT/EP2005/011265
(87) Internationale Veröffentlichungsnummer: WO 2006/050799

(56) Entgegenhaltungen:
- EP-A- 0 571 778
- DE-A1- 3 743 051
- FR-A- 1 572 291
- US-A- 4 014 525
- US-A- 4 824 257
- US-A- 5 779 986

## Beschreibung

Die Erfindung betrifft einen Reaktor zur Behandlung hochviskoser Kunststoffschmelzen, bestehend aus einem horizontalen, zylinderförmigen, einen beheizbaren Doppelmantel besitzenden, an beiden Enden mit einem Deckel verschlossenen Behälter, mit im Bereich von dessen Schmelzesumpf angeordneten, mit Durchbrechungen versehenen, abgetrennte Kammern bildenden Blechwänden, mit einer Schmetzeeintrittsöffnung auf der einen und eine Schmelzeaustrittsöffnung, ggf. mit vorgeschaltetem Wehr, auf der anderen Behälterseite, mit einer horizontalen, deckelseitig gelagerten Welle mit mehreren hintereinander darauf angebrachten, an Speichen befestigten, als Rührelemente wirkenden Ringscheiben, mit einem Brüdenabzug am Behälterumfang oder am schmelzeaustrittseitigen Deckel und mit einem im Bereich des oberen Behältersektors zwischen dem Außenumfang der Ringscheiben und der Innenseite des Behälters gebildeten sichelförmigen Raum, wobei in die Zwischenräumen der Ringscheiben jeweils zwei einander gegenüberliegende, stationär mit der Innenseite des Behälters verbundene, rahmenförmige Abstreifer winkelversetzt geführt und mit engem Abstand an den Stirnseiten der Ringscheiben und dem Mantel der Welle vorbeigeführt sind. Insbesondere bezieht sich die Erfindung auf eine Vorrichtung zur Herstellung von Polykondensaten durch Polykondensation unter erhöhter Temperatur und unter Vakuum aus durch einen Schmelzeprozess vorgebildeten Kondensaten.

Es ist bekannt, dass bei der Verwendung von beispielsweise in der DE-B-1745541 beschriebenen Reaktoren zur Herstellung vernetzend abbauender Polykondensate stets kleine Substanzmengen wegen ihrer hohen Zähigkeit im Reaktor länger oder ganz verbleiben und die Produktqualität durch Vernetzung und/oder Verfärbung beeinträchtigen. Dieses Problem lässt sich durch den Einsatz von Reaktoren mit kreisringförmigen Rührscheiben verringern. Solche Ringscheibenreaktoren bestehen aus einem liegenden zylindrischen Behälter mit doppeltem Außenmantel, der zur Beheizung und zum Einstellen der notwendigen Temperatur im Reaktionsraum dient. Bei einem einfachen Ringscheibenreaktor tritt das Vorkondensat über einen Produkteintragsstutzen vorn in den Behälter ein und - je nach Verfahrensstufe - das Prepolykondensat bzw. Polykondensat über einen Produktaustragsstutzen hinten aus dem Behälter aus. Im Behälter selbst sind an einer durchgehenden, ggf. beheizbaren Welle, die auch eine Hohlwelle sein kann, an Speichen befestigte, kreisringförmige Rührscheiben rotierbar angeordnet. Die Ringscheiben, die je nach Zähigkeit der zu verarbeitenden Schmelze einzeln oder zu mehreren im Verbund angebracht sind, laufen in im unteren den Produktsumpf enthaltenen Segment des Behälters befindlichen Kammern, die durch Bleche abgetrennt sind und verhindern, dass Teile von in den Behälter eintretender Schmelze unvermischt zum Produktaustrag gelangen. Die Größe der Kammern wird auf die Zähigkeit der zu verarbeitenden Schmelze in der Weise abgestimmt, dass mit steigender Zähigkeit der Abstand der Trennwände größer wird. Die ggf. beheizbaren Trennwände sind mit besonders gestalteten Durchbrechungen versehen, die einen gezielten Schmelzeaustausch von Kammer zu Kammer ermöglichen. Die ausdampfenden Spaltprodukte (Brüden) werden über einen an der Rückseite oder im Mantel des Behälters angebrachten Ableitungsstutzen ausgeleitet. Um ein störungsfreies Austragen des Pre- bzw. Polykondensationsprodukts sowie ausreichende Verweilzeit und Füllstand der Schmelze zu gewährleisten, ist in der Kammer, aus der das Pre- bzw. Polykondensationsprodukt ausgeleitet wird, ein genügend hohes und konstantes Schmelzeniveau erforderlich; daher sind in dieser Kammer keine regulären Ringscheiben vorgesehen. Die Ringscheiben nehmen aus den bis zu 50 % ihrer radialen Höhe mit Schmelze gefüllten Kammern Schmelze auf und ziehen diese auf die Ringscheibenflächen auf. Bei Überschreiten der die Achse der Welle einschließenden horizontalen Ebene wirkt die Schwerkraft auf die Schmelze, so dass die von den Ringscheiben herab laufende Schmelze gegen die von den Ringscheiben hochgezogene Schmelze anläuft und sich ein Stau bildet, durch den ein senkrechtes Ablaufen und Abtropfen von der Innenkante der Ringscheibe bewirkt wird und erste Schmelzeschleier und Schmelzefilme entstehen. Wenn die Viskosität der Schmelze und die Umfangsgeschwindigkeit der Ringscheiben in einem bestimmten Verhältnis zueinander stehen, bilden sich über die gesamten freien Ringscheibenflächen dünne Schmelzefilme mit großer Oberfläche, die in den Schmelzesumpf zurückfließen und dort wieder untergemischt werden. Derartige Ringscheibenreaktoren sind für die Verarbeitung von Schmelzen mit Viskositäten von bis zu 300 Pa · s geeignet. Bei der Verarbeitung von Schmelzen mit höheren Viskositäten und thermisch empfindlichen Polymeren kann es an den Stellen der Ringscheiben und der Reaktorwand, an denen die Schmelze nicht ausreichend durchmischt wird, zu Verfärbungen erzeugenden Abbauerscheinungen kommen. Um das zu vermeiden, sind zwischen benachbarten Ringscheiben Scherelemente angeordnet, die die Ringscheiben und Reaktorwände abreinigen und die Schmelze neu verteilen bzw. untermischen. Zu den üblichen Betriebsbedingungen gehört neben hohen Temperaturen auch das Vakuum. Um den Druckverlust über den Reaktor möglichst klein zu halten, ist ein als Dampfraum dienender Freiraum über den Ringscheiben zur Ableitung der ausdampfenden Brüden notwendig. Dieser Raum wird dadurch geschaffen, dass die Welle exzentrisch zur Behälterachse angeordnet ist und im Dampfraum ein größerer Abstand zwischen dem Außenumfang der Ringscheiben und der Innenseite des Behälters entsteht als am Boden. Durch diesen im Querschnitt sichelförmigen Raum strömen dann die Brüden ungehindert bis zum Ableitungsstutzen. Von den Brüden mitgerissene Produkttröpfchen (Entrainment) werden an den Ringscheiben abgeschieden und dem Prozess erneut zugeführt.

Gemäß DE-A-3743051 ist zwischen zwei benachbarten Ringscheiben jeweils ein stationär mit der Innenseite des Reaktors verbundenes Abstreif- und ein Stauelement vorgesehen. Die oberhalb der die Achse der Welle einschließenden Horizontalebene angebrachten Stauelemente besitzen ein sphärisches, in Wellennähe verbreitertes Profil, dessen wellenseitiger Abschnitt früher mit der Schmelze im Eingriff steht als dessen behälterseitiger Fuß. Dadurch erfolgt eine nach außen gerichtete Verdrängung der Schmelze, so dass ein zu frühes, für die vollständige Schmelzebeaufschlagung und Selbstreinigung der Behälterwand unerwünschtes Abströmen der Schmelze in das Behälterinnere verhindert wird. Die an den Stauelementen aufgestaute Schmelze wird durch die Ringscheiben einer Scherung unterworfen und in Umfangsrichtung mit einer frischen Oberfläche ausgezogen. Den Schmelzetransport und die regelmäßige Verteilung von Schmelze über die Behälterwand übernehmen am Außenumfang der Ringscheiben befindliche Schleppleisten. Durch die unterhalb der die Achse der Welle einschließenden Horizontalebene angebrachten rahmenförmigen randgängigen Abstreifelemente werden vor dem Eintauchen der Ringscheiben in den Schmelzesumpf die an der Welle, den Seitenflächen der Ringscheiben und an den Innenflächen der Schleppleisten haftenden Schmelzeschichten einer erneuten Scherung und Filmbildung und die Ringscheiben einer Säuberung unterworfen. Die Ringscheiben können beheizbar sein. Diese Ringscheibenreaktoren werden dort mit Erfolg eingesetzt, wo es nicht mehr möglich ist, mit dem vorstehend beschriebenen üblichen Ringscheibenreaktor hochviskose Polymere unverfärbt herzustellen.

Der Nachteil dieser Ringscheibenreaktoren besteht in einem vergleichsweise hohen Aufwand für Montage und insbesondere Demontage, da ein Herausziehen der Welle in axialer Richtung nur nach Zerstörung der Schweißverbindung zwischen Abstreifer und Innenseite des Behälters oder durch die Verwendung von jeweils durch eine entsprechende Bauart in mehrere Abschnitte zerlegbare Ringscheiben möglich ist. Das Verschweißen der Abstreifer mit der Innenseite des Behälters muss mit großer Genauigkeit erfolgen und auf den Abstand der auf der Welle angebrachten Ringscheiben angepasst werden. Eine nachträgliche Abstandskorrektur ist bei dieser Ausführungsform nicht möglich.

Es ist die Aufgabe der vorliegenden Erfindung, den eingangs beschriebenen Reaktor so zu gestalten, dass Welle und die Abstreifer einfacher montierbar und demontierbar sind.

Gelöst ist diese Aufgabe dadurch, dass die Abstreifer mittels einer Formschlussverbindung, wie Stiftverbindung, Bolzenverbindung oder Keilverbindung, an der Innenseite des Behälters befestigt sind. Durch die eintauchseitig abgebrachten Abstreifer werden die an den Stirnseiten der Ringscheiben haftenden Schmelzeschichten abgetragen und einer Scherung unterworfen. Die auftauchseitig angebrachten Abstreifer sorgen dafür, dass die Dicke der auf die Ringscheiben aufgezogene Schmelzeschicht auf 30 bis 75 mm begrenzt wird und damit dünne Filme mit definierter Oberfläche herstellbar sind. Das führt zu einer gleichmäßigen Reaktionszeit, einem stetigen Diffusionsweg und damit zu homogeneren Produkten.

In axialer Richtung beträgt der Abstand der Stirnseiten der Rührscheiben zu den unmittelbar gegenüberliegenden Flächen des Abstreifelements 1 bis 20 mm, vorzugsweise 5 bis 15 mm.

Die Abstreifelemente sind rechteckig oder trapezförmig ausgebildet, wobei die längere Seite der parallelen Seiten des Trapez zur Welle benachbart angeordnet ist.

Nach einem besonderen Merkmal der Erfindung sind der parallel zu den Rührscheiben verlaufende Rahmenschenkel und die sumpfseitige Kante des parallel zur Welle benachbart verlaufenden Rahmenschenkels der Abstreifelemente mit einem auf der den Rührscheiben und der Welle abgewandten Seiten mit einem scharfkantigen Anschliff versehen, um eine gute Durchtrennung der Schmelze zu erzielen.

Im Rahmen der Ausgestaltung der Erfindung sind die parallel zu den Rührscheiben und die parallel und benachbart zu der Welle liegenden Rahmenschenkel der Abstreifelemente geneigt zu der quer zur Welle verlaufenden Vertikalebene bzw. geneigt zu der die Wellenachse einschließenden Vertikalebene angeordnet, um je nach Erfordernissen nur eine scherende oder eine scherende und quetschende Wirkung zu erzielen. Eine scherende Wirkung wird erzeugt, wenn die Rahmenschenkel der Abstreifelemente bezogen auf die Vertikalebene einen spitzen Winkel mit den Rührscheiben bilden. Mit einem überstumpfen Winkel der Rahmenschenkel lässt sich eine scherende und quetschende Behandlung der Schmelze erzielen. Bei spitzwinkeliger Anordnung der Rahmenschenkel der Abstreifelemente wird die abgescherte Schmelze durch den Rahmen in den Schmelzesumpf zurückgefördert, während bei überstumpfwinkeliger Anordnung der Rahmenschenkel der Abstreifelemente die Schmelze die abgescherte/gequetschte Schmelze von unten nach oben durch die Rahmenöffnung tritt und über die Rahmenschenkel nach außen befördert in den Schmelzesumpf zurückläuft.

In Richtung zum Inneren des Behälters hin stehen die den Stirnseiten der Ringscheiben gegenüberliegenden Rahmenschenkel der nur von den Stirnseiten die Schmelze abtragenden Abstreifer 5 bis 20 mm über den Innenumfang der Ringscheiben vor.

Damit die Positionierung der Abstreifelemente auch unter starker Belastung gewährleistet ist, sind die einander gegenüberliegenden Abstreifelemente zur Erzielung der erforderlichen Biegesteifigkeit jeweils auf einer quer zur Wellenachse angebrachten Stützplatte gelagert, die sumpfseitig auf der Innenseite des Behälters mittels einer Schnellverbindung befestigt ist. Durch eine am wellenseitigen Ende befindliche teilkreisförmige Ausnehmung umschließt die Stützplatte den dem Sumpf zugewandten Abschnitt der Welle, wobei zwischen Welle und Ausnehmung ein Spalt von 0,5 bis 5mm verbleibt. Auf diese Weise verhindert die Stützplatte, dass auf der Welle haftende Schmelze in axialer Richtung zum Schmelzeaustrag befördert wird, ohne in den Sumpf gelangt zu sein.

Eine besondere Ausgestaltung der Erfindung ist darin zusehen, dass bei zentrisch gelagerter Welle der Krümmungsradius der zwischen den Speichen der Ringscheiben sich erstreckenden Ringscheibenausschnitte größer als der Krümmungsradius der Innenseite des Behälters ist.

Nach einem weiteren Erfindungsmerkmal ist die zentrisch gelagerte Welle oszillierend bewegbar und/oder axial verschiebbar.

Die Erfindung ist nachfolgend näher und beispielhaft erläutert. Es zeigen:

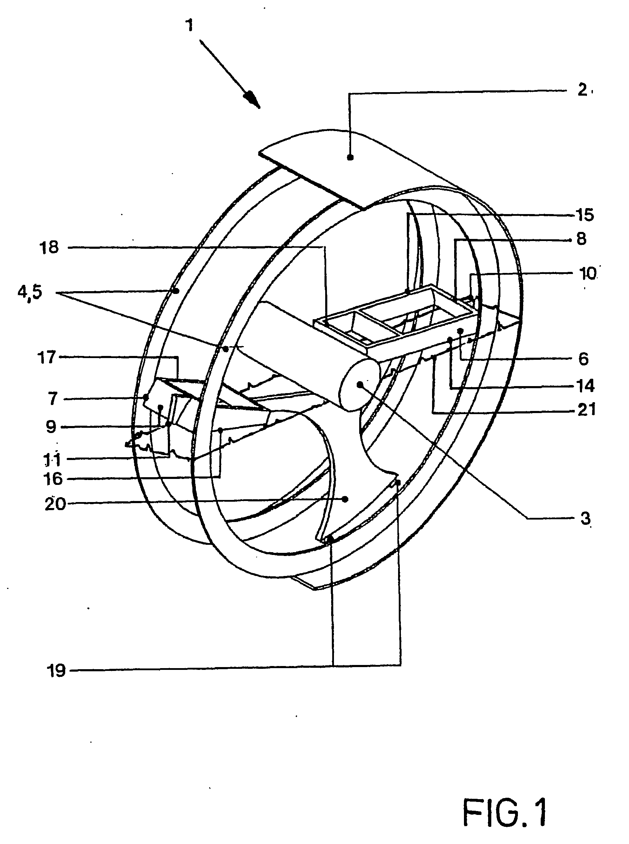

- Fig. 1: eine perspektivische Darstellung eines Ausschnitts eines Reaktors mit kreisringförmigen Ringscheiben mit zwischen diesen angebrachten rahmenförmigen, rechteckigen Abstreifern,

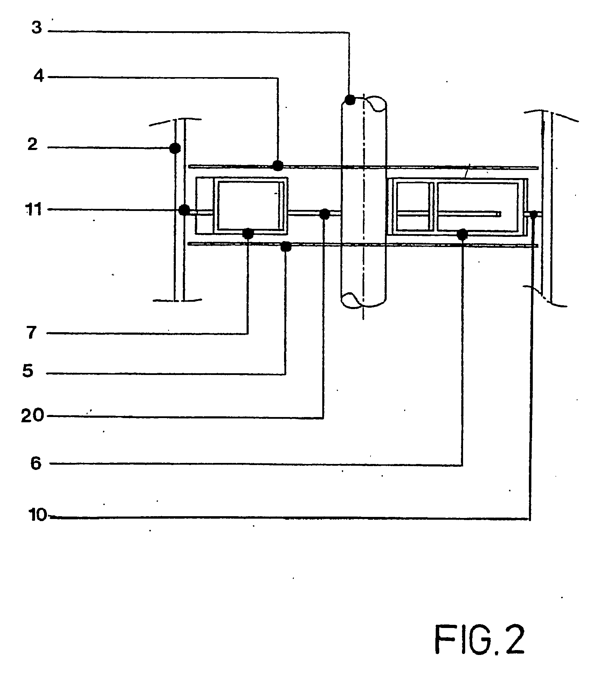

- Fig. 2: einen Querschnitt eines Ausschnitts eines Reaktors mit kreisringförmigen Ringscheiben mit zwischen diesen angebrachten Abstreifern entlang der die Achse der Welle einschließenden Horizontalebene,
- Fig. 3 bis Fig. 5: jeweils einen Querschnitt eines Ausschnitts eines Reaktors mit kreisringförmigen Ringscheiben mit zwischen den Ringscheiben angebrachten Abstreifern unterschiedlicher Rahmenformen entlang der die Achse der Welle einschließenden Horizontalebene,
- Fig. 6 und 7: jeweils eine schematische Darstellung der Wirkungsweise von den kreisringförmigen Ringscheiben benachbarten Rahmenschenkel der Abstreifer mit unterschiedlichen Neigungswinkeln,
- Fig. 8: die Vorderansicht einer von der Kreisform abweichenden Ringscheibe mit gegenüber der Krümmung der Innenseite des Behälters kleinerer Krümmung der zwischen den Speichen verlaufenden Ringscheibenausschnitte,
- Fig. 9: eine schematische Detaildarstellung einer als Bolzenverbindung gestalteten Formschlussverbindung zwischen der Innenseite des Behälters und einem Abstreifer.

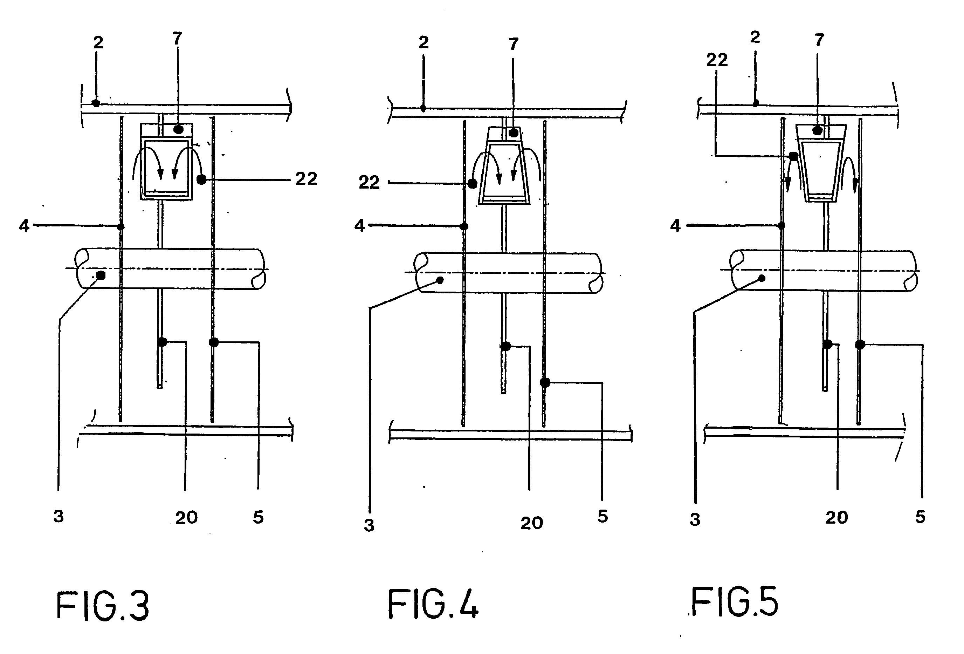

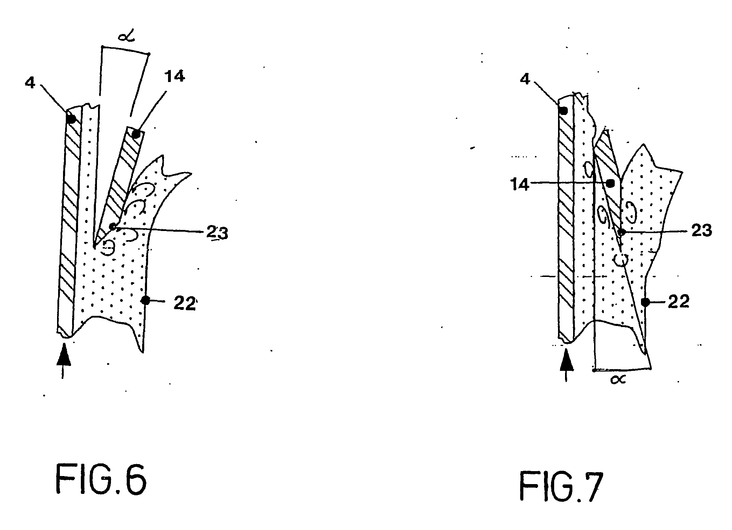

Bei Schmelzviskositäten von > 300 Pa • s und thermisch stark empfindlichen Polymeren ist zur Vermeidung von Abbauerscheinungen und damit verbundenen Verfärbungen ein intensives Vermischen der Schmelze erforderlich. Um das zu erreichen, wird als Reaktor ein liegender Behälter (1) mit beheizbarem Doppelmantel (2) und flachen, nicht dargestellten Deckeln an beiden Enden eingesetzt. Der Reaktor besitzt im Innern eine beheizbare, deckelseitig exzentrisch gelagert Hohlwelle (3), auf der als Rührelemente Ringscheiben (4,5) mittels nicht dargestellter Speichen befestigt sind. Die exzentrische Lagerung der Hohlwelle (3) ist erforderlich, um im oberen Segment des Behälters (1) einen Sammelraum für die beim Rühren der Schmelze sich bildenden Brüden, die über eine im Doppelmantel (2) befindliche nicht dargestellte Öffnung ausgeleitet werden, zu schaffen. Zwischen zwei benachbarten Ringscheiben (4,5) sind jeweils zwei einander gegenüberliegende rahmenförmige Abstreifer (6,7) um 190° winkelversetzt angebracht. Die Abstreifer (6,7) sind jeweils über an den achsparallelen Rahmenschenkeln (8,9) angebrachte Tragelemente (10,11) mit einer an der Innenseite des Behälters (1) angeschweißten Halteplatte (12) verbunden. Das Tragelement (10,11) verfügt über ein Loch, durch das ein gesicherter Bolzen (13) gesteckt ist. Durch die nicht dargestellte gabelförmige Aufnahme in der Halteplatte (12) lässt sich das Tragelement (10,11) bei bereits montierter Welle (3) leicht einbauen. Die den Stirnseiten der Ringscheiben (4,5) zugekehrten Rahmenschenkel (14,15,16,17) der Abstreifer (6,7) sind in einem geringen Abstand von ca. 3 mm vor den Stirnseiten der Ringscheiben (4,5) angeordnet. Der der Hohlwelle (3) zugewandte randgängige Rahmenschenkel (18) des Abstreifers (6) löst die Schmelze von der Hohlwelle (3) und fördert diese in axialer Richtung, während durch den Abstreifer (7) die Schmelze nur von den Ringscheiben (4,5) abgetragen wird. Die auf die Abstreifer (6,7) wirkenden Biege- und Rotationskräfte werden von über Formschlussverbindungen (19) mit der Innenseite des Behälters (2) verbundene, in axialer Richtung gesehen, hyperbolisch geformte, quer zur Strömungsrichtung der Schmelze angebrachte Stützplatten (20) aufgenommen. In dem der Hohlwelle (3) zugekehrten Randbereich der Stützplatte (20) ist eine teilkreisförmige Ausnehmung angebracht, in der die Hohlwelle (3) mit einem Abstand von etwa 2,5 mm zum Rand der Stützplatte (20) rotiert. Die Stützplatte (20) verhindert, dass Schmelze auf der Hohlwelle (3) in axialer Richtung, ohne durch den Schmelzesumpf (21) geleitet worden zu sein, zur Schmelzeaustrittsöffnung gefördert wird. Die Abstreifer (6,7) reinigen die Stirnflächen der rotierenden Ringscheiben (4,5) und die Oberfläche der Hohlwelle (3), wobei die an den Ringscheiben (4,5) und der Hohlwelle (3) haftende Schmelze je nach Form des Rahmens der Abstreifer (6,7) einer Scherung und/oder Quetschung unterworfen wird. Üblicherweise besitzen die Abstreifer (6,7), wie in Fig. 3 dargestellt, eine rechtwinklige Rahmenform oder gemäß Fig. 4 eine trapezförmige Rahmenform, bei der die längere Rahmenseite der parallel zueinander verlaufenden Rahmenseiten der Hohlwelle (3) zugewandt ist. Die Fig. 5 zeigt eine trapezförmige Rahmenform, bei der die längere Rahmenseite der parallel zueinander verlaufenden Rahmenseiten der Innenseite des Behälters (1) zugewandt ist.

Wie in Fig. 6 dargestellt, bilden die den Stirnseiten der Ringscheiben (4,5) zugekehrten Rahmenschenkel (14,15,16,17) der Abstreifer (6,7) mit den Stirnseiten der Ringscheiben (4,5) einen spitzen Winkel α von 20 ° von oben oder von unten, wie in Fig. 7 dargestellt. Die von oben her gemäß Fig. 6 spitzwinklig zu den Stirnseiten der Ringscheiben (4,[5]) angestellten Rahmenschenkel (14,[15],16,[17]) unterwerfen die an den Ringscheiben (4,[5]) haftende Schmelzeschicht (20) vor dem erneuten Eintauchen in den Schmelzesumpf (8) im wesentlichen einer Scherung, während die gemäß Fig. 7 von unten her spitzwinkelig zu den Stirnseiten der Ringscheiben (4,[5]) angestellten Rahmenschenkel (14,[15],16,[17]) eine Scher- und Quetschbeanspruchung der an den Ringscheiben (4,[5]) haftenden Schmelzeschicht (22) erzeugen. Die Schmelze wird durch den Rahmen der Abstreifer (6,7) in den Schmelzesumpf (8) zurückgefördert. Die spitzwinklige Anstellung der Rahmenschenkel (14,[15],16,[17]) in Kombination mit einer auf der der Stirnseite der Ringscheiben (4,[5]) abgekehrten Seite der Rahmenschenkel angebrachten messerartigen Anschärfung (23) sorgen für leichtes und schonendes Durchtrennen der Schmelzeschicht (22).

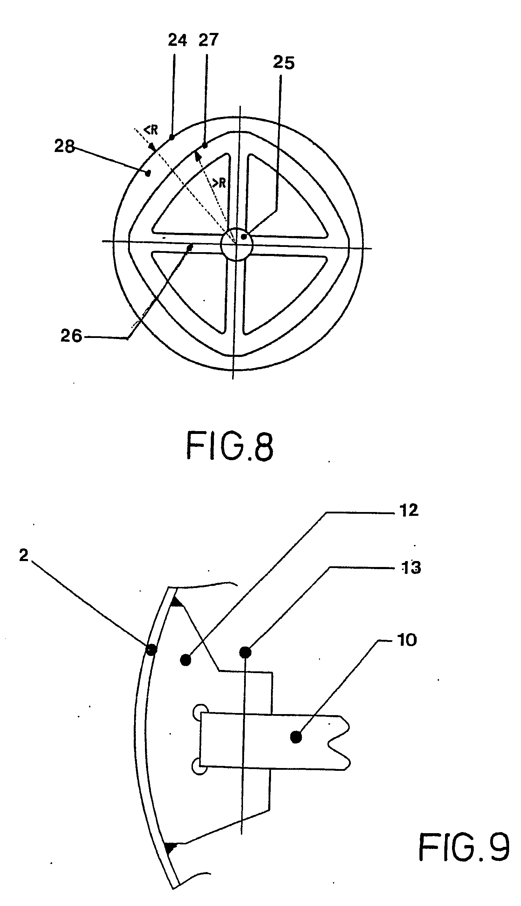

Bei dem in Fig. 8 schematisch wiedergegebenen Querschnitt durch einen als Reaktor dienenden Behälter (24) ist mit der zentrisch gelagerten Welle (25) über Speichen (26) eine von der Kreisform abweichende Ringscheibe (27) verbunden, bei der die sich zwischen den Speichen (26) erstreckenden Ringscheibenausschnitte einen gegenüber dem Krümmungsradius (< R) der Innenseite des Behälters (24) größeren Krümmungsradius (> R) besitzen, so dass im Scheitelbereich des Behälters (24) ein sichelförmiger Freiraum (28) entsteht, durch den die Brüden bevorzugt entweichen können. In vorteilhafter Weise wandert der sichelförmige Freiraum (28) mit der Rotation der Ringscheibe (27) und trägt so zur Abreinigung der Innenseite des Behälters (24) bei. In Verbindung mit einer axialen periodischen Verschiebung der Welle (25) ergibt sich eine besonders gute Entfernung von Ablagerungen von der Innenseite des Behälters (24).

Die in Fig. 9 schematisch dargestellte Formschlussverbindung erlaubt einen deutlich vereinfachten Austausch der Ringscheiben und/oder der Welle bei Wartung oder Reparatur des Reaktors, da sich die steckbaren und lösbar befestigten Abstreifer ohne besonderen Aufwand entfernt lassen.

## Patentansprüche

1. Reaktor zur Behandlung hochviskoser Kunststoffschmelzen, bestehend aus einem horizontal angeordneten, zylinderförmigen, einen beheizbaren Doppelmantel (2) besitzenden, an beiden Enden jeweils mit einem Deckel verschlossenen Behälter (1), mit im Bereich von dessen Schmelzesumpf (21) angeordneten, mit Durchbrechungen versehenen, abgetrennte Kammern bildenden Blechwänden, mit einer Schmelzeeintrittsöffnung auf der einen und einer Schmelzeaustrittsöffnung, der ggf. ein Wehr vorgeschaltet ist, auf der anderen Behälterseite, mit einer horizontalen deckelseitig gelagerten Welle (3) mit mehreren darauf hintereinander angebrachten, an Speichen befestigten, als Rührelemente wirkenden Ringscheiben (4,5), mit einem Brüdenabzug am Behälterumfang oder am schmelzeaustrittsseitigen Deckel und mit einem im Bereich des oberen Behältersektors zwischen dem Außenumfang der Ringscheiben und der Innenseite des Behälters gebildeten sichelförmigen Freiraum, wobei in den Zwischenräumen der Ringscheiben jeweils zwei einander gegenüberliegende, stationär mit der Innenseite des Behälters verbundene, rahmenförmige Abstreifer (6,7) winkelversetzt geführt und mit engem Abstand zu den Stirnseiten der Ringscheiben und dem Mantel der Welle vorbeigeführt sind, **dadurch gekennzeichnet, dass** die Abstreifer (6,7) jeweils mittels einer Formschlussverbindung mit der Innenseite des Behälters (1) verbunden sind.

2. Reaktor nach Anspruch 1, **dadurch gekennzeichnet, dass** die Formschlussverbindung eine Stiftverbindung, eine Bolzenverbindung oder eine Keilverbindung ist.

3. Reaktor nach einem der Ansprüche 1 und 2, **dadurch gekennzeichnet, dass** die Abstreifer (6,7) rechteckig sind.

4. Reaktor nach einem der Ansprüche 1 und 2, **dadurch gekennzeichnet, dass** die Abstreifer (6,7) trapezförmig sind und die längere der parallelen Seiten der Trapezform der Welle (3) oder der Innenseite des Behälters (1) zugewandt ist.

5. Reaktor nach einem der Ansprüche 1 bis 4, **dadurch gekennzeichnet, dass** die dem Schmelzesumpf (21) zugekehrten Kanten der den Stirnseiten der Ringscheiben (4,5) benachbarten Rahmenschenkel (14,15,16,17) und die dem Schmelzesumpf und der Welle (3) zugekehrte Kante des Rahmenschenkels (18) als messerartige Anschärfung (23), vorzugsweise mit ringscheibenabseitigem Anschliff, ausgebildet sind.

6. Reaktor nach einem der Ansprüche 1 bis 5, **dadurch gekennzeichnet, dass** die den Stirnseiten der Ringscheiben (4,5) zugekehrten Rahmenschenkel (14,15,16,17) einen spitzen Winkel (α) von oben oder von unten her mit den Stirnseiten der Ringscheiben bilden.

7. Reaktor nach einem der Ansprüche 1 bis 6, **dadurch gekennzeichnet, dass** sich auf der Innenseite des Behälters (1) in dem den Schmelzesumpf (21) enthaltenden Segment in den Zwischenräumen der Ringscheiben (4,5) jeweils eine mittels einer Formschlussverbindung (19) an der Innenseite des Behälters befestigte senkrecht zur Wellenachse angeordnete Stützplatte (20) für die Abstreifer (6,7) befindet.

8. Reaktor nach Anspruch 1 bis 7, **dadurch gekennzeichnet, dass** der Abstand zwischen den Stirnseiten der Ringscheiben (4,5) und/oder der Welle (3) und den jeweils benachbarten Rahmenschenkeln (14,15,16,17,18) der Abstreifer (6,7) 1 bis 20 mm beträgt.

9. Reaktor nach einem der Ansprüche 1 bis 8, **dadurch gekennzeichnet, dass** die den Stirnseiten der Ringscheiben (4,5) gegenüberliegend verlaufenden Rahmenschenkel (16,17) der nur von den Stirnseiten der Ringscheiben die Schmelze abtragenden Abstreifer (7) 50 bis 200 mm nach innen über den inneren Umfang der Ringscheiben vorstehen.

10. Reaktor nach einem der Ansprüche 1 bis 9, **dadurch gekennzeichnet, dass** die Welle (3) exzentrisch gelagert ist.

11. Reaktor nach einem der Ansprüche 1 bis 10, **dadurch gekennzeichnet, dass** die Welle (25) zentrisch gelagert ist und der Krümmungsradius der zwischen den Speichen (26) der Ringscheiben (27) sich erstreckenden Ringscheibenausschnitte größer als der Krümmungsradius der Innenseite des Behälters (24) ist.

12. Reaktor nach einem der Ansprüche 1 bis 11, **dadurch gekennzeichnet, dass** die Welle (25) zentrisch gelagert ist und oszillierend bewegbar und/oder axial verschiebbar ist.

## Claims

1. A reactor for the treatment of highly viscous plastic melts comprising a horizontally arranged, cylindrical vessel (1) having a heatable double jacket (2) sealed on both ends with a lid each, with plate walls provided with perforations forming separate chambers arranged in the region of its melt sump (21) with a melt inlet opening on the one and a melt outlet opening, arranged upstream of which is a weir if applicable, on the other vessel side, with a horizontal shaft (3) mounted on the lid side with a plurality of ring discs (4,5) attached to spokes and acting as agitating elements attached one after the other behind said shaft, with a vapour extraction on the vessel circumference or on the melt outlet side lid and a crescent-shaped free space formed in the region of the upper vessel sector between the outer circumference of the ring discs and the inside of the vessel, wherein in the intermediate spaces of the ring discs two frame-shaped wipers (6,7) which are positioned opposite each other and which are connected with the inside of the vessel in a stationary manner are each guided offset at an angle and are routed past the ends of the ring discs and the jacket of the shaft at a close distance, **characterized in that** the wipers (6,7) each are connected with the inside of the vessel (1) by means of a positive connection.

2. The reactor according to Claim 1, **characterized in that** the positive connection is a pin connection, a bolt connection or a key connection.

3. The reactor according to one of the Claims 1 and 2, **characterized in that** the wipers (6,7) are rectangular.

4. The reactor according to one of the Claims 1 and 2, **characterized in that** the wipers (6,7) are trapezoidal and the longer one of the parallel sides face the trapezoidal shape of the shaft (3) or the inside of the vessel (1).

5. The reactor according to any one of the Claims 1 to 4, **characterized in that** the edges facing the melt sump (21) of the frame legs (14, 15, 16, 17) adjacent to the ends of the ring discs (4, 5) and the edge of the frame leg (18) facing the melt sump and the shaft (3) are embodied as knife-like sharpening (23), preferentially with ground face remote from the ring disc.

6. The reactor according to any one of the Claims 1 to 5, **characterized in that** the frame legs (14, 15, 16, 17) facing the ends of the ring discs (4,5) form an acute angle (α) from the top or from the bottom with the ends of the ring discs.

7. The reactor according to any one of the Claims 1 to 6, **characterized in that** on the inside of the vessel (1) in the segment containing the melt sump (21) in the intermediate spaces of the ring discs (4,5) a support plate (20) each for the wipers (6,7) which is attached to the inside of the vessel by means of a positive connection (19) and arranged vertically to the shaft axis is located.

8. The reactor according to Claims 1 to 7, **characterized in that** the distance between the ends of the ring discs (4,5) and/or the shaft (3) and each of the adjacent frame legs (14, 15, 16, 17, 18) of the wipers (6,7) is 1 to 20 mm.

9. The reactor according to any one of the Claims 1 to 8, **characterized in that** the frame legs (16, 17) which are oriented opposite to the ends of the ring discs (4,5) of the wipers (7) which only remove the melt from the ends of the ring discs, protrude 50 to 200 mm in the direction of the inside over the inner circumference of the ring discs.

10. The reactor according to any one of the Claims 1 to 9, **characterized in that** the shaft (3) is mounted eccentrically.

11. The reactor according to any one of the Claims 1 to 10, **characterized in that** the shaft (25) is concentrically mounted and the radius of curvature of the ring disc segments extending between the spokes (26) of the ring discs (27) is greater than the radius of curvature of the inside of the vessel (24).

12. The reactor according to any one of the Claims 1 to 11, **characterized in that** the shaft (25) is concentrically mounted and moveable in an oscillating manner and/or displaceable in an axial manner.

## Revendications

1. Réacteur pour le traitement de masses de matière plastique fondue hautement visqueuse, consistant dans un conteneur (1) fermé sur chacune des extrémités avec un couvercle, comportant une double enveloppe (2) cylindrique, susceptible d'être chauffée, disposée à l'horizontale, avec des parois en tôle disposées dans la région de son pied de bain (21), formant des chambres séparées, munies de perçages, avec une ouverture d'entrée pour la masse fondue sur l'un et une ouverture de sortie pour la masse fondue sur l'autre côté de sortie de la masse fondue, en amont de laquelle est monté le cas échéant un déversoir, avec un arbre (3) logé à l'horizontale, côté couvercle, avec plusieurs disques annulaires (4, 5) montés les uns derrières les autres sur celui-ci, fixés sur des rayons, agissant comme des éléments agitateurs, avec des conduits d'évacuation de la vapeur sur la périphérie du conteneur ou sur le couvercle côté sortie de la masse fondue et avec un espace libre formé dans une région du secteur supérieur du conteneur, entre la périphérie extérieure du disque annulaire et la face intérieure du conteneur, dans des espaces intermédiaires des disques annulaires, chaque fois deux racloirs (6,7) mutuellement opposés en forme de cadre, reliés de façon stationnaire avec la face intérieure du conteneur étant guidés avec un déport angulaire et passant à une faible distance par rapport aux faces frontales des disques annulaires et l'enveloppe de l'arbre devant ces dernières, **caractérisé en ce que** les racloirs (6,7) sont reliés chacun au moyen d'un assemblage par complémentarité de forme avec la face intérieure du conteneur (1).

2. Réacteur selon la revendication 1, **caractérisé en ce que** l'assemblage par complémentarité de forme est un assemblage par tige, une assemblage par boulon ou un assemblage par clavette.

3. Réacteur selon l'une quelconque des revendications 1 et 2, **caractérisé en ce que** les racloirs (6, 7) sont rectangulaires.

4. Réacteur selon l'une quelconque des revendications 1 et 2, **caractérisé en ce que** les racloirs, (6, 7) sont trapézoïdaux et **en ce que** le côté le plus long des côtés parallèles du trapèze fait face à l'arbre (3) ou à la face intérieure du conteneur (1).

5. Réacteur selon l'une quelconque des revendications 1 à 4, **caractérisé en ce que** les arêtes dirigées vers le pied de bain (21) des branches du cadre (14, 15, 16, 17) voisines du côté frontal des disques annulaires (4, 5) et les arêtes dirigées vers le pied de bain et vers l'arbre (3) de la branche du cadre (18) sont conçues sous la forme d'un chanfrein (23) de type lame, de préférence avec une face polie sur le côté opposé au disque annulaire.

6. Réacteur selon l'une quelconque des revendications 1 à 5, **caractérisé en ce que** les branches du cadre (14, 15, 16, 17) dirigées vers les faces frontales des disques annulaires (4, 5) forment un angle aigu (α), à partir du haut ou du bas avec les faces frontales des disques annulaires.

7. Réacteur selon l'une quelconque des revendications 1 à 6, **caractérisé en ce que** sur la face intérieure du conteneur (1), dans un segment contenant le pied de bain (21) une plaque d'appui (20) pour les racloirs (6, 7), fixée au moyen d'un assemblage par complémentarité de forme (19) sur la face intérieure du réservoir, disposée à la perpendiculaire de l'axe,de l'arbre se trouve dans chacun des espaces intermédiaires entre les disques annulaires (4, 5).

8. Réacteur selon la revendication 1 à 7, **caractérisé en ce que** la distance entre les faces frontales des disques annulaires (4, 5) et/ou entre l'arbre (3) et les branches chaque fois voisines du cadre (14,15,16,17,18) des racloirs (6,7) est de 1 à 20 mm.

9. Réacteur selon l'une quelconque des revendications 1 à 8, **caractérisé en ce que** les branches du cadre (16, 17) s'étendant à l'opposée des faces frontales des disques annulaires (4, 5) des seuls racloirs (7) enlevant la masse fondue des faces frontales des disques annulaires débordent de 50 à 200 mm vers l'intérieur, par dessus la périphérie intérieure des disques annulaires.

10. Réacteur selon l'une quelconque des revendications 1 à 9, **caractérisé en ce que** l'arbre (3) est logé de façon excentrique.

11. Réacteur selon l'une quelconque des revendications 1 à 10, **caractérisé en ce que** l'arbre (25) est logé de façon centrale et **en ce que** le rayon de courbure des tronçons de disques annulaires s'étendant entre les rayons (26) des disques annulaires (27) est supérieur au rayon de courbure de la face intérieure du conteneur (24).

12. Réacteur selon l'une quelconque des revendications 1 à 11, **caractérisé en ce que** l'arbre (25) est logé de façon centrale et **en ce qu'**il est mobile en oscillation et/ou déplaçable en translation axiale.
